# EUROPEAN PATENT APPLICATION

(11) **EP 2 523 084 A1**
(43) Date of publication of application: **14.11.2012**
(21) Application number: 11007834.2
(22) Date of filing: 27.09.2011
(51) Int. Cl.: G06F 3/048

(54) **Method for providing user interface for categorizing icons and electronic device using the same**

(30) Priority: 13.05.2011 TW 00116907
(71) Applicant: ACER Inc., Hsichih Tapei Hsien 221 (TW)
(72) Inventor: Sip, Kim-Yeung, 221 Tapei Hsien (TW)
(74) Representative: Altenburg, Bernardus Stephanus Franciscus

(57) **Abstract**

A method for providing a user interface for categorizing icons is disclosed. The method applies to an electronic device (1), wherein the electronic device (1) includes a touch screen (11), the touch screen (11) providing a display screen (111). The method includes the steps of: providing a plurality of categorization tags (21, 22∼27), wherein the categorization tags (21, 22∼27) each take on a specific color and include a categorization page (211, 231, 241), wherein the categorization page (211, 231, 241) displays at least one icon (311, 331, 341) representing a file or a program, the at least one icon (311, 331, 341) including a frame (3111, 3311, 3411), and a color of the frame (3111, 3311, 3411) is the same as the specific color of the categorization tag (21, 22∼27); and displaying the plurality of categorization tags (21, 22∼27) and one of the categorization pages (21, 22∼27) thereof on the display screen (111).

## Description

### BACKGROUND OF THE INVENTION

### Field of the Invention

The present invention relates to user interfaces and electronic devices, and more particularly, to a method for providing a user interface for categorizing icons and an electronic device using the same.

### Description of the Prior Art

In various operating systems, various files (such as graphic files, video/audio files, or document files) or programs (such as word processing programs, video/audio playing software, or games) always have corresponding icons for users to select and execute. Each of the icons usually takes on a pattern that represents an object corresponding thereto. A user usually puts the icons on the desktop or in other folders. To execute the icons, the user selects and executes the icons on the desktop or in other folders. In some operating systems, the icon of a folder takes on a special pattern which represents the attribute of the files in the folder; for example, the icon of a folder for holding audio files includes a musical note symbol, and the icon of a folder for holding pictures looks like a picture. However, to execute files or programs in the folder, the user still has to find the folder, select and open the folder, and eventually execute the icons of the files or programs. The aforesaid process requires searching a folder in a layer-by-layer manner and thereby renders the user's operation inconvenient. Furthermore, the patterns of the icons of the folders are too monotonous to impress the user.

Accordingly, it is imperative to provide a method for providing a user interface for categorizing icons and an electronic device using the same, so as to overcome the aforesaid existing drawbacks of the prior art.

### SUMMARY OF THE INVENTION

It is a primary objective of the present invention to provide a method for providing a user interface for categorizing icons and an electronic device using the same to enable a user to find intended icons intuitively.

In order to achieve the above and other objectives, the present invention provides a method for providing a user interface for categorizing icons. The method applies to an electric device, wherein the electronic device comprises a touch screen. The touch screen provides a display screen. The method comprises the steps of: providing a plurality of categorization tags, wherein the categorization tags each take on a specific color and comprise a categorization page displaying at least one icon representing a file or a program, the at least one icon comprising a frame, wherein a color of the frame is substantially identical to the specific color of the categorization tag of the at least one icon; and displaying the plurality of categorization tags and one of the categorization pages thereof on the display screen.

In an embodiment of the present invention, the categorization tags each have a specific attribute. The at least one icon correlates with a specific attribute corresponding thereto.

In an embodiment of the present invention, the categorization tags each come substantially in the form of a bar when displayed on one side of the display screen.

In order to achieve the above and other objectives, the present invention provides an electronic device comprising a touch screen, a tag module, and a control module. The touch screen provides a display screen. The tag module generates a plurality of categorization tags. The categorization tags each displays a specific color and comprises a categorization page. The categorization page displays at least one icon representing a file or a program. The at least one icon comprises a frame, wherein a color of the frame is substantially identical to the specific color of the categorization tag of the at least one icon. The control module displays the plurality of categorization tags and one of the categorization pages thereof on the display screen.

In an embodiment of the present invention, the categorization tags each have a specific attribute. The at least one icon correlates with a specific attribute corresponding thereto.

In an embodiment of the present invention, under the control of the control module, the categorization tags each come substantially in the form of a bar when displayed on one side of the display screen.

### BRIEF DESCRIPTION OF THE DRAWINGS

The above and other objectives, features, and advantages of the present invention are hereunder illustrated with specific embodiments in conjunction with the accompanying drawings, in which:

FIG. 1 is a schematic view of an electronic device according to an embodiment of the present invention;

FIG. 2 is a schematic view of the structure of the electronic device according to an embodiment of the present invention;

FIG. 3 is a flow chart of a method for providing a user interface for categorizing icons according to an embodiment of the present invention;

FIG. 4 through FIG. 7 are schematic views of operating the method for providing a user interface for categorizing icons according to an embodiment of the present invention, respectively;

FIG. 8 is a flow chart of moving the icons with the method for providing a user interface for categorizing icons according to an embodiment of the present invention; and

FIG. 9 through FIG. 10 are schematic views of operating the method for providing a user interface for categorizing icons according to an embodiment of the present invention, respectively.

### DETAILED DESCRIPTION OF THE EMBODIMENTS

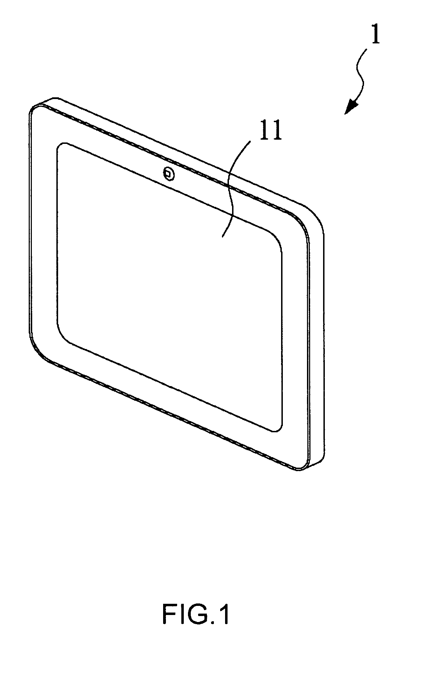

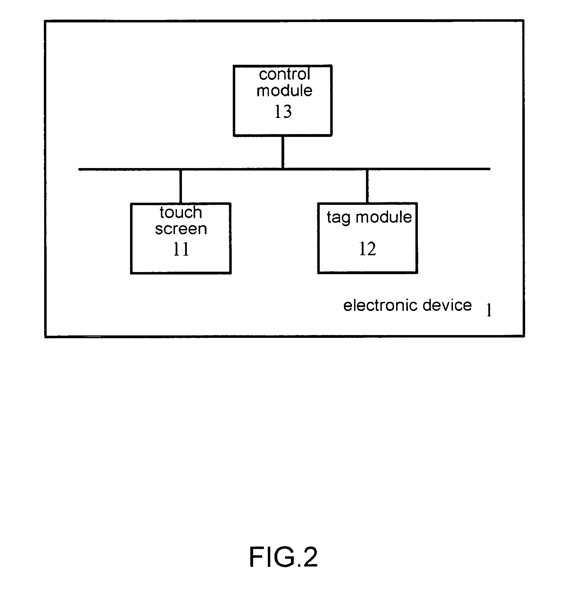

Referring to FIG. 1 and FIG. 2, there is shown in FIG. 1 a schematic view of an electronic device according to an embodiment of the present invention, and there is shown in FIG. 2 a schematic view of the structure of the electronic device according to an embodiment of the present invention.

As shown in FIG. 1, in an embodiment of the present invention, an electronic device 1 is a tablet PC. The electronic device 1 comprises a touch screen 11, but the present invention is not limited thereto. For example, the electronic device 1 can also be a personal computer (PC), a notebook computer, a personal digital assistant (PDA), a smart phone, or any other portable electronic device that has a touch screen.

As shown in FIG. 2, the electronic device 1 comprises the touch screen 11, a tag module 12, and a control module 13. The touch screen 11 provides a display screen. The tag module 12 generates a plurality of categorization tags. The control module 13 displays the plurality of categorization tags and one of categorization pages thereof on the display screen.

In an embodiment of the present invention, the tag module 12 and the control module 13 are hard devices, software programs, circuits, or combinations thereof. Furthermore, the aforesaid modules can be self-contained, respectively, or can operate in conjunction with each other, and the disclosure of the present invention is not limited thereto.

The steps of the method for providing a user interface for categorizing icons according to the present invention are described in detail and exemplified by the electronic device 1 of the present invention as shown in FIG. 1 and FIG. 2. However, a point to note is that the application of the method of the present invention is not limited to the electronic device 1 shown in FIG. 1 and FIG. 2; instead, the present invention can apply to any device, provided that the primary objective of the present invention is attained.

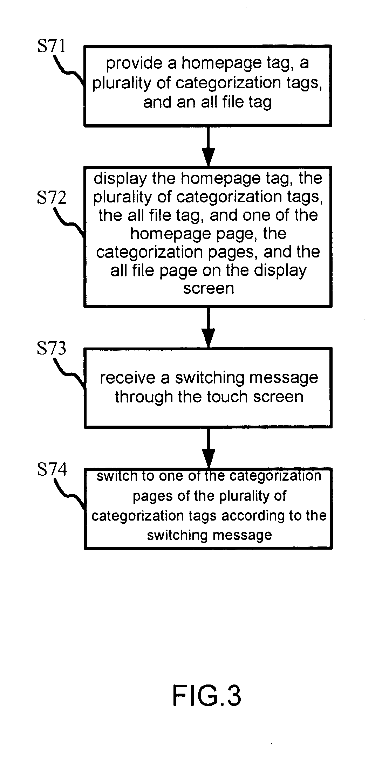

As shown in FIG. 3, the method for providing a user interface for categorizing icons according to the present invention starts with step S71: providing a homepage tag, a plurality of categorization tags, and an all file tag.

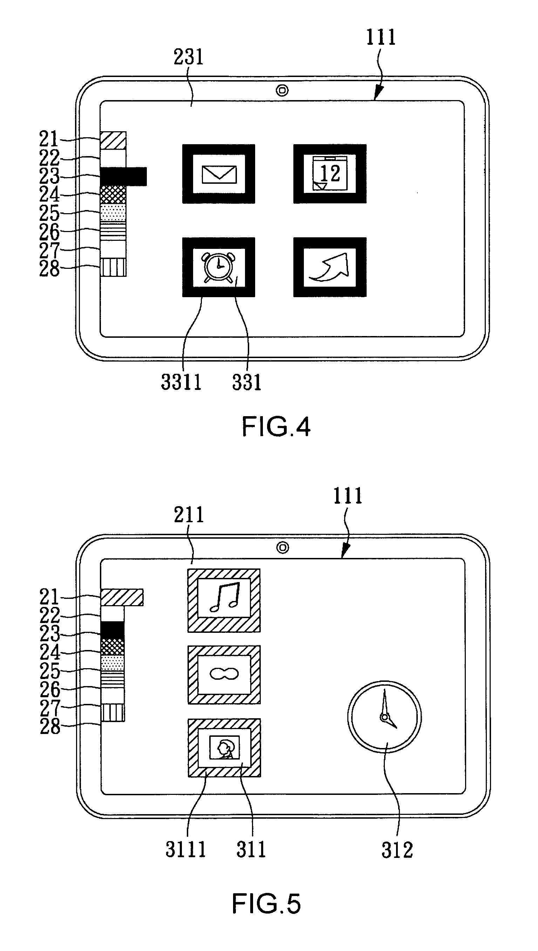

As shown in FIG. 4, the tag module 12 produces a homepage tag 21, a plurality of categorization tags 22-27, and an all file tag 28. The homepage tag 21, the plurality of categorization tags 22-27, and the all file tag 28 take on specific colors, respectively. The homepage tag 21, the plurality of categorization tags 22-27, and the all file tag 28 comprise a corresponding homepage page, categorization pages, and an all file page, respectively. The homepage page, the categorization pages, and the all file page display at least one icon or no icon (described below). A point to note is that FIG. 4 is not restrictive of the quantity of the categorization tags. In an embodiment of the present invention, colors of the homepage tag 21, the categorization tags 22-27, and the all file tag 28 are orange, red, pink, cyan, blue, coffee, brown, and green, respectively, but the disclosure of the present invention is not limited thereto.

A point to note is that, for the sake of brevity, any tag or tags generally described in the embodiments below can be the homepage tag 21, the categorization tags 22-27, or the all file tag 28, and any page or pages generally described in the embodiments below can be the homepage page, the categorization pages, or the all file page.

Subsequently, step S72 is executed to display the homepage tag, the plurality of categorization tags, the all file tag, and one of the homepage page, the categorization pages, and the all file page on the display screen.

As shown in FIG. 4, in step S72, the control module 13 displays the homepage tag 21, the plurality of categorization tags 22-27, the all file tag 28, and one of the homepage page, the categorization pages, and the all file page on the display screen 111. The homepage tag 21, the categorization tags 22-27, and the all file tag 28 each come substantially in the form of a bar when displayed on the left of the display screen 111. The homepage tag 21, the plurality of categorization tags 22-27, and the all file tag 28 are arranged in sequence, but the disclosure of the present invention is not limited to the aforesaid arrangement. For example, the homepage tag 21, the plurality of categorization tags 22-27, and the all file tag 28 can also be arranged at the top, on the right, or at the bottom of the display screen 111.

In an embodiment of the present invention, the categorization page 231 of the categorization tag 23 is shown in FIG. 4. Take the categorization tag 23 and the categorization page 231 thereof as example. The categorization page 231 of the present invention displays a plurality of icons 331. The icons 331 each comprise a frame 3311. The frames 3311 take on the same color as the specific color (that is, pink) of the categorization tag 23 associated with the icons 331. The icons 331 correspond to application programs or files. A point to note is that it is also possible for the categorization page 231 not to display any icons, when otherwise existing icons have been moved to other tags by a user, for example. The way of moving an icon is described later. Furthermore, the background color of the categorization page 231 can also be the same as the color of the categorization tag 23. Likewise, details of the categorization tags 22, 24-27 and their categorization pages and icons are herein disclosed by analogy and thus are not repeatedly described hereunder for the sake of brevity.

Once a user selects one of the homepage tag 21, the plurality of categorization tags 22-27, and the all file tag 28, the control module 13 will display the corresponding categorization page of the selected one of the homepage tag 21, the plurality of categorization tags 22-27, and the all file tag 28 on the display screen 111.

The homepage tag 21, the plurality of categorization tags 22-27, and the all file tag 28 each have a specific attribute. The at least one icon correlates with a specific attribute corresponding thereto. As shown in FIG. 4, in an embodiment of the present invention, the categorization tag 23 has a specific attribute "entertainment", and thus the plurality of icons 331 corresponding to the categorization tag 23 also correspond to entertainment-related application programs (such as various video/audio playing software) or entertainment-related files (such as various video/audio files), but the disclosure of the present invention is not limited thereto. The user has the discretion to determine, in a way described below, what application programs or files should be regarded as entertainment-related application programs or entertainment-related files, respectively.

An embodiment of the present invention assigns the homepage tag 21 to a specific attribute "homepage", the categorization tag 22 to a specific attribute "my favorite", the categorization tag 24 to a specific attribute "work", the categorization tag 25 to a specific attribute "news", the categorization tag 26 to a specific attribute "game", the categorization tag 27 to a specific attribute "recently used", and the all file tag 28 to a specific attribute "all file", but the disclosure of the present invention is not limited to the aforesaid attributes.

As shown in FIG. 5, the homepage page 211 of the homepage tag 21 comprises the plurality of icons 311 and a widget 312. Frames 3111 of icons 311 have the same color as the specific color (that is, pastel orange) of the homepage tag 21. The plurality of icons 311 in the homepage page 211 can represent application programs or files commonly used by the user. In an embodiment of the present invention, only widgets are allowed to be put in the homepage page, to preclude the disorder of the categorization pages of the categorization tags 22-27, but the disclosure of the present invention is not limited thereto. In an embodiment of the present invention, the homepage page 211 of the homepage tag 21 is the default webpage after the electronic device 1 has started, but the disclosure of the present invention is not limited thereto.

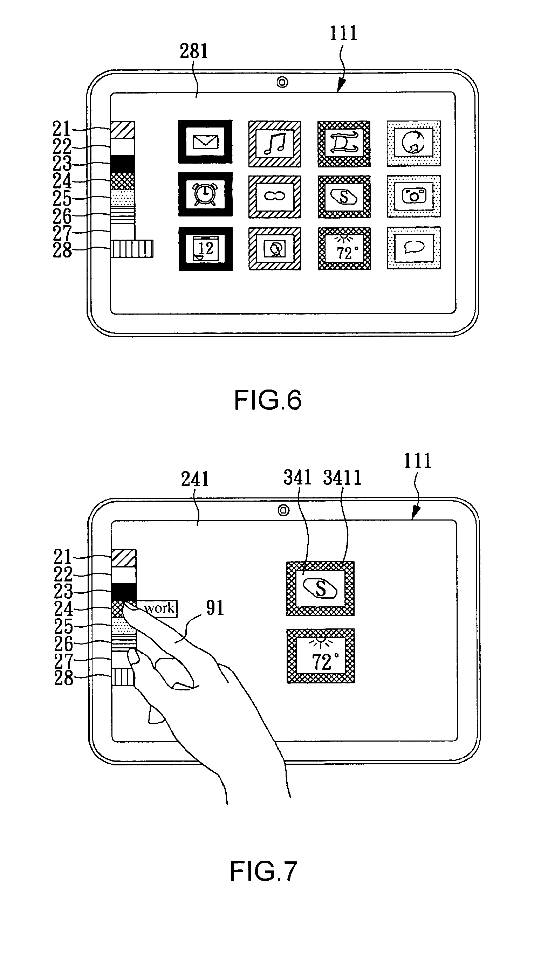

As shown in FIG. 6, an all file page 281 of the all file tag 28 displays all the icons in the electronic device 1. A point to note is that the frame of each of the icons in the all file page 281 takes on the specific color of the homepage tag 21 or the plurality of categorization tags 22-27 corresponding to the icons, and the icons in the all file page 281 cannot be executed but can just be browsed by the user. Accordingly, the user can know the specific attributes of all the icons and then select other tags to seek icons to be executed by the user, but the disclosure of the present invention is not limited thereto.

As shown in FIGs. 4, 5, and 6, if the display screen 111 displays the categorization page 231, the homepage page 211, and the all file page 281, the corresponding categorization tag 23, the corresponding homepage tag 21, and the corresponding all file tag 28 are more conspicuous in position than other tags are. Hence, the user is aware of what tag the display screen 111 is presently displaying the page thereof, but the disclosure of the present invention is not limited to the aforesaid conspicuous manner. For example, a tag may also be enlarged when presented.

As shown in FIG. 7, once a finger 91 of the user moves to the position of one of the tags on the display screen 111, a textual message regarding the specific attribute of the targeted one of the tags will pop into view; once the finger 91 of the user leaves the display screen 111, the pop-up textual message will be hidden. For example, if the finger 91 of the user touches the categorization tag 24, the textual message "work" regarding the categorization tag 24 will pop into view. In doing so, the user can be aware of the specific attribute of a tag.

Subsequently, step S73 is executed to receive a switching message through the touch screen.

In an embodiment of the present invention, the switching message is a signal generated as a result of a press exerted by the finger 91 of the user on any one of the tags (especially the homepage tag 21 or the plurality of categorization tags 22∼27) on the display screen 111, but the disclosure of the present invention is not limited thereto.

Subsequently, step S74 is executed to switch to one of the categorization pages of the plurality of categorization tags according to the switching message.

As shown in FIG. 4, in an embodiment of the present invention, the display screen 111 initially displays the categorization page 231, and the switching message is a signal generated as a result of a press exerted by the finger 91 of the user on the categorization tag 24. Hence, the control module 13 switches from the categorization page 231 to the categorization page 241 according to the switching message (as shown in FIG. 7). The categorization page 241 comprises a plurality of icons 341. The icons 341 each comprise a frame 3411. The color of the frames 3411 is the same as the specific color (that is, cyan) of the categorization tag 24 associated with the icons 341. To be specific, once the finger 91 of the user comes into contact with a tag, the control module 13 will switch from the current categorization page to the categorization page corresponding to the tag according to the switching message generated as a result of the contact between the finger 91 and the tag.

The method for providing a user interface for categorizing icons according to the present invention also enables the user to move icons and thus alter the positions and attributes of the icons. The following description is still exemplified by the electronic device 1 of the present invention as shown in FIG. 1 and FIG. 2.

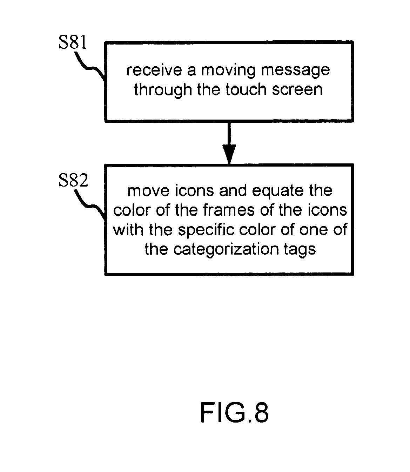

As shown in FIG. 8, the method of the present invention goes to step S81: receiving a moving message through the touch screen.

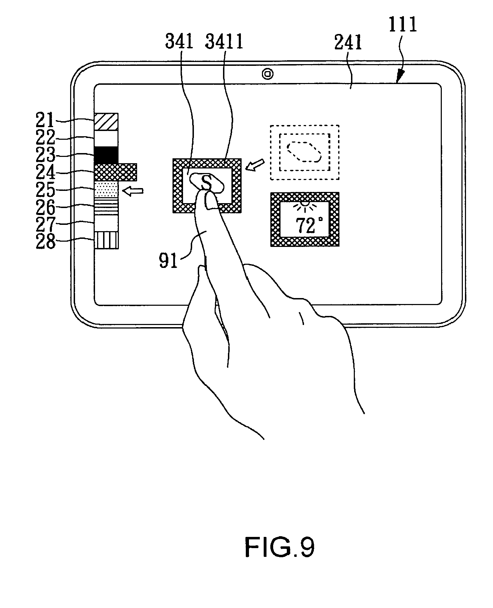

In an embodiment of the present invention, the moving message further involves dragging the at least one icon on the display screen 111 to one of the categorization tags or dragging one of the categorization tags to the at least one icon on the display screen 111. As shown in FIG. 9, in an embodiment of the present invention, to replace the specific attribute of one of the icons 341 of the categorization page 241 with the specific attribute of the categorization tag 25, the user enters the moving message in a specific manner, that is, pressing one of the icons 341 with the finger 91 of the user continuously (for at least two seconds, for example), dragging the one of the icons 341 to the categorization tag 25, and eventually releasing the one of the icons 341. In an embodiment of the present invention, the intensity of the color of the frame 3411 of one of the icons 341 or the intensity of the color of the frames of all the icons varies dynamically (for example, alternating between cyan, dark cyan, and pale cyan) while one of the icons 341 is being dragged, prompting the user to enter the moving mode; meanwhile, the user is prevented from performing the function of each icons, but the disclosure of the present invention is not limited thereto. For example, the intensity of the background color of the categorization page 241 varies dynamically while one of the icons 341 is being dragged. A point to note is that the present invention discloses pressing and dragging a plurality of icons with a plurality of fingers concurrently; hence, the disclosure of the present invention is not limited to moving the icons one by one.

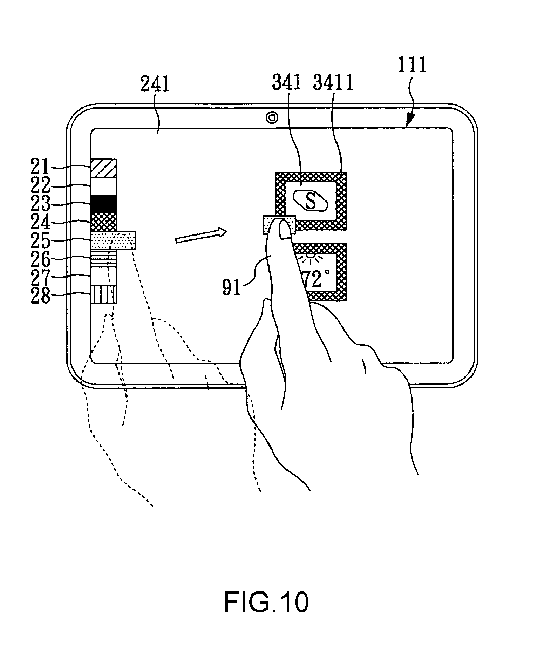

As shown in FIG. 10, in another embodiment of the present invention, the moving message is entered in a specific manner, that is, pressing the categorization tag 25 continuously with the finger 91 of the user, dragging the categorization tag 25 to one of the icons 341, and eventually releasing the categorization tag 25.

Step S82: move icons and equate the color of the frames of the icons with the specific color of one of the categorization tags.

The control module 13 moves the icons 341 to the categorization page of the categorization tag 25, and the color of the frames 3411 of the icons 341 turns into the specific color (that is, blue) (not shown) of the categorization tag 25.

The present invention provides a method for providing a user interface for categorizing icons and an electronic device using the same to at least achieve the effects as follows: first, a user knows the specific attribute of an object in a tag by making reference to the color of the tag in an intuitive and memory-efficient manner; second, the user only needs to select a tag in order to enter a page thereof, thus dispensing with the hassle of searching a folder in a layer-by-layer manner as taught by the prior art.
In conclusion, the features of the present invention are completely different from those of the prior art in terms of objectives, means, and effects. However, it should be noted that the above embodiments are illustrative of the principle and effect of the present invention only, but should not be interpreted as restrictive of the scope of the present invention. Hence, persons skilled in the art can make modifications and changes to the aforesaid embodiments without going against the technical principle and spirit of the present invention. Accordingly, the extent of legal protection for the rights claimable toward the present invention should be defined by the appended claims.
The appending claims are incorporated in the description by reference. In spite of any specific backreference mentioned in a sub-claim, subclaims refer to any of the preceding claims also.

## Claims

1. A method for providing a user interface for categorizing icons, the method being applicable to an electronic device (1) comprising a touch screen (11) for providing a display screen (111), the method comprising the steps of:
providing a plurality of categorization tags (21, 22~27), wherein the categorization tags (21, 22~27) each display on a specific color and has a corresponding categorization page (211, 231, 241) displaying at least one icon (311, 331, 341) representing a file or a program, the at least one icon (311, 331, 341) comprising a frame (3111, 3311, 3411), wherein a color of the frame (3111, 3311, 3411) is substantially identical to the specific color of the corresponding categorization tag (21, 22~27); and
displaying the plurality of categorization tags (21, 22~27) and one of the categorization pages (211, 231, 241, 281) thereof on the display screen (111).

2. The method of claim 1, wherein each of the categorization tags (21, 22~27) has a specific attribute, and the at least one icon (311, 331, 341) correlates with the specific attribute corresponding thereto.

3. The method of claim 1, wherein each of the categorization tags (21, 22~27) comes substantially in form of a bar when displayed on one side of the display screen (111).

4. The method of claim 1, wherein the at least one icon (311, 331, 341) corresponds to an application program or a file.

5. The method of claim 1, further comprising the steps of:
receiving a moving message through the touch screen (11);
moving the at least one icon (311, 331, 341) to one of the categorization pages (211, 231, 241) of the plurality of categorization tags (21, 22~27) according to the moving message; and
equating the color of the frame (3111, 3311, 3411) of the at least one icon (311, 331, 341) with the specific color of one of the categorization tags (21, 22∼27).

6. The method of claim 5, wherein the moving message involves detecting a specific input by means of the touch screen (11) and dragging the at least one icon (311, 331, 341) on the display screen (111) to one of the categorization tags (21, 22∼27) or dragging one of the categorization tags (21, 22∼27) to the at least one icon (311, 331, 341) on the display screen (111) such that, after the one of the categorization tags (21, 22∼27) has been dragged to the at least one icon (311, 331, 341) on the display screen (111), the color of the frame (3111, 3311, 3411) of the at least one icon (311, 331, 341) is substantially the same as the specific color of the categorization tag (21, 22∼27) thus dragged.

7. The method of claim 6, wherein the step of moving the at least one icon (311, 331, 341) to one of the categorization pages (211, 231, 241) of the plurality of categorization tags (21, 22∼27) further comprises the sub-step of varying dynamically an intensity of the color of the frame (3111, 3311, 3411) of the at least one icon (311, 331, 341) or an intensity of a background color of the categorization pages (211, 231, 241) after detecting the specific input.

8. The method of claim 3, further comprising the step of providing an all file tag (28), the all file tag (28) taking on a specific color and comprising an all file page (281) for displaying all the icons (311, 331, 341), and each color of the frame (3111, 3311, 3411) of the icons (311, 331, 341) is the same as the color of the original categorization tags (21, 22∼27) corresponding thereto.

9. An electronic device (1), comprising:
a touch screen (11) for providing a display screen (111);
a tag module (12) for generating a plurality of categorization tags (21, 22∼27), the categorization tags (21, 22∼27) each displaying a specific color and having a corresponding categorization page (211, 231, 241), the categorization page (211, 231, 241) displaying at least one icon (311, 331, 341) representing a file or a program, the at least one icon (311, 331, 341) comprising a frame (3111, 3311, 3411), wherein a color of the frame (3111, 3311, 3411) is substantially identical to the specific color of the corresponding categorization tag (21, 22∼27); and
a control module (13) for displaying the plurality of categorization tags (21, 22∼27) and one of the categorization pages (211, 231, 241) thereof on the display screen (111).

10. The electronic device of claim 9, wherein the categorization tags (21, 22∼27) each have a specific attribute, and the at least one icon (311, 331, 341) correlates with the specific attribute corresponding thereto.

11. The electronic device of claim 9, wherein, under control of the control module (13), the categorization tags (21, 22∼27) each come substantially in the form of a bar when displayed on one side of the display screen (111).

12. The electronic device of claim 9, wherein the touch screen (11) receives a switching message, such that the control module (13) moves the at least one icon (311, 331, 341) to one of the categorization pages (211, 231, 241) of the plurality of categorization tags (21, 22∼27) and equates the color of the frame (3111, 3311, 3411) of the at least one icon (311, 331, 341) with the specific color of one of the categorization tags (21, 22∼27) according to the switching message.

13. The electronic device of claim 12, wherein the switching message involves detecting a specific input by means of the touch screen (11) and dragging the at least one icon (311, 331, 341) on the display screen (111) to one of the categorization tags (21, 22∼27) or dragging one of the categorization tags (21, 22∼27) to the at least one icon (311, 331, 341) on the display screen (111) such that, after the one of the categorization tags (21, 22∼27) has been dragged to the at least one icon (311, 331, 341) on the display screen (111), the color of the frame (3111, 3311, 3411) of the at least one icon (311, 331, 341) is substantially the same as the specific color of the categorization tag (21, 22∼27) thus dragged.

14. The electronic device of claim 12, wherein, upon detection of the specific input by the touch screen (11), an intensity of the color of the frame (3111, 3311, 3411) of the at least one icon (311, 331, 341) moved or an intensity of a background color of the categorization pages (211, 231, 241) varies dynamically under control of the control module (13).

15. The electronic device of claim 11, wherein the tag module (12) produces an all file tag (28) taking on a specific color and comprising an all file page (281) for displaying all the icons (311, 331, 341), and each color of the frame (3111, 3311, 3411) of the icons (311, 331, 341) is the same as the color of the categorization tags (21, 22∼27) corresponding thereto
